# EUROPEAN PATENT APPLICATION

(11) **EP 2 789 586 A1**
(43) Date of publication of application: **15.10.2014**
(21) Application number: 12855716.2
(22) Date of filing: 04.12.2012
(51) Int. Cl.: C02F 1/46, C02F 1/461, C02F 5/00, F24H 1/00

(54) **ELECTROLYSIS DEVICE AND HEAT PUMP WATER HEATER PROVIDED WITH SAME**

(30) Priority: 07.12.2011 JP 2011267697
(71) Applicant: Daikin Industries, Ltd., Osaka 530-8323 (JP)
(72) Inventor: SHIBATA, Yutaka, Osaka-shi, Osaka 530-8323 (JP); YOSHIDA, Kaori, Osaka-shi, Osaka 530-8323 (JP); AGATA, You, Osaka-shi, Osaka 530-8323 (JP)
(74) Representative: Goddar, Heinz J.
(86) International application number: PCT/JP2012/007777
(87) International publication number: WO 2013/084482

(57) **Abstract**

An electrolysis device (41) is used in a heat pump hot-water supply device provided with a water heat exchanger (21) for heating water and is also used for removing a scale component included in the water. The electrolysis device (41) includes a container (47) that has a water inlet (43) and a water outlet (45), a plurality of electrodes (51, 52) that are arranged inside the container (47), and a gas discharge part (70) that is provided at a position higher than the water outlet (45) and that discharges a gas inside the container (47) to the outside of the container (47) while preventing water inside the container (47) from being discharged to the outside of the container.

## Description

### Technical Field

The present invention relates to an electrolysis device and a heat pump hot-water supply device provided with the same.

### Background Art

A heat pump hot-water supply device is generally provided with a tank that stores water, a refrigerant circuit that has a water heat exchanger for heating the water by exchanging heat with a refrigerant, and a conduit that feeds the water stored in the tank to the water heat exchanger and returns the water heated in the water heat exchanger back into the tank. With this heat pump hot-water supply device, the water stored in the tank is usually supplied from a water supply source such as tap water, well water, and the like.

The tap water and the well water contain components such as calcium ions, magnesium ions and the like that are the cause for scale formation (hereinafter referred to as scale components). Thereby, the scale of calcium salt, magnesium salt or the like is deposited in the heat pump hot-water supply device. Groundwater such as the well water in particular has higher concentration of the scale components, as compared with the tap water, and has such water quality that the scale is easily caused. In addition, the water is heated and the water temperature increases in the water heat exchanger, which facilitates the deposition of the scale in particular. The scale deposited and accumulated on the inner surface of a pipe of the water heat exchange may cause problems such as deterioration of heat transfer performance of the water heat exchanger, narrowing of a channel in the pipe, and the like.

Patent Document 1 suggests, for example, a scale formation prevention hot-water supply device provided with a plurality of electrodes that are opposingly arranged to face a channel in the middle of a water supply side pipe for connecting a water supply hole and a heat exchanger, and means for forcibly applying a weak current between the electrodes, in which water flowing near the surfaces of one of the electrodes can be made more alkaline by the application of the weak current than pH of supplied water.

Incidentally, gases such as hydrogen, oxygen, chlorine and the like are generated in the process of removing the scale components by using the electrolysis, as described above. The generated gas may accumulate inside a container that serves as a water channel. A plurality of electrodes are arranged in the container. The accumulation of the gas inside the container may reduce a contact area between the water and the electrodes, hinder a water flow, and the like, thereby deteriorating scale component removal performance. In addition, disadvantages may be caused when the gas flows out of the container to the downstream side, such as the increase in flow resistance in the water heat exchanger, the deterioration of performance of the heat exchanger, and the like.

Patent Document 1: Japanese Patent Application Publication No. 2001-317817

### Summary of the Invention

It is an object of the present invention to provide an electrolysis device that can appropriately discharge a gas generated in the process of removing scale components by using electrolysis from a container, and a heat pump hot-water supply device provided with the same.

An electrolysis device according to the present invention is used in a heat pump hot-water supply device provided with a water heat exchanger for heating water and is for removing a scale component included in the water. The electrolysis device includes a container that has a water inlet and a water outlet, a plurality of electrodes that are arranged inside the container, and a gas discharge part that is provided at a position higher than the water outlet and that discharges a gas inside the container to the outside of the container while preventing water inside the container from being discharged to the outside of the container.

### Brief Description of the Drawings

Fig. 1 is a block diagram illustrating a heat pump hot-water supply device according to an embodiment of the present invention.
Fig. 2 is a perspective view illustrating an electrolysis device according to a first embodiment of the present invention, the electrolysis device being used in the heat pump hot-water supply device.
Figs. 3 illustrate the electrolysis device according to the first embodiment, in which Fig. 3A is a cross-sectional view taken along the IIIA - IIIA line in Fig. 2, and Fig. 3B is a cross-sectional view taken along the IIIB - IIIB line in Fig. 2.
Fig. 4A is a cross-sectional view illustrating a modification example 1 of the electrolysis device according to the first embodiment, and Fig. 4B is a cross-sectional view illustrating a modification example 2 of the electrolysis device according to the first embodiment.
Figs. 5A and 5B are cross-sectional views illustrating a modification example 3 of the electrolysis device according to the first embodiment.
Fig. 6A is a cross-sectional view illustrating a modification example 4 of the electrolysis device according to the first embodiment, and Fig. 6B is a cross-sectional view illustrating a modification example 5 of the electrolysis device according to the first embodiment.
Fig. 7A is a cross-sectional view illustrating a modification example 6 of the electrolysis device according to the first embodiment, and Fig. 7B is a cross-sectional view illustrating a modification example 7 of the electrolysis device according to the first embodiment.
Fig. 8A is a cross-sectional view illustrating the electrolysis device according to a second embodiment of the present invention, the electrolysis device being used in the heat pump hot-water supply device, and Fig. 8B is a cross-sectional view illustrating a modification example 1 of the electrolysis device according to the second embodiment.
Fig. 9A is a schematic view illustrating the state where a gas is discharged from an automatic discharge valve according to the second embodiment, and Fig. 9B is a schematic view illustrating the state where water is prevented from being discharged from the automatic discharge valve.
Figs. 10A and 10B are cross-sectional views illustrating the electrolysis device according to a third embodiment of the present invention, the electrolysis device being used in the heat pump hot-water supply device.
Figs. 11A and 11B are cross-sectional views illustrating a modification example 1 of the electrolysis device according to the third embodiment.
Figs. 12A and 12B are cross-sectional views illustrating a modification example 2 of the electrolysis device according to the third embodiment.
Figs. 13A and 13B are cross-sectional views illustrating a modification example 3 of the electrolysis device according to the third embodiment.
Fig. 14 is a cross-sectional view illustrating the electrolysis device according to a fourth embodiment of the present invention, the electrolysis device being used in the heat pump hot-water supply device.

### Description of Embodiments

### <Heat pump hot-water supply device>

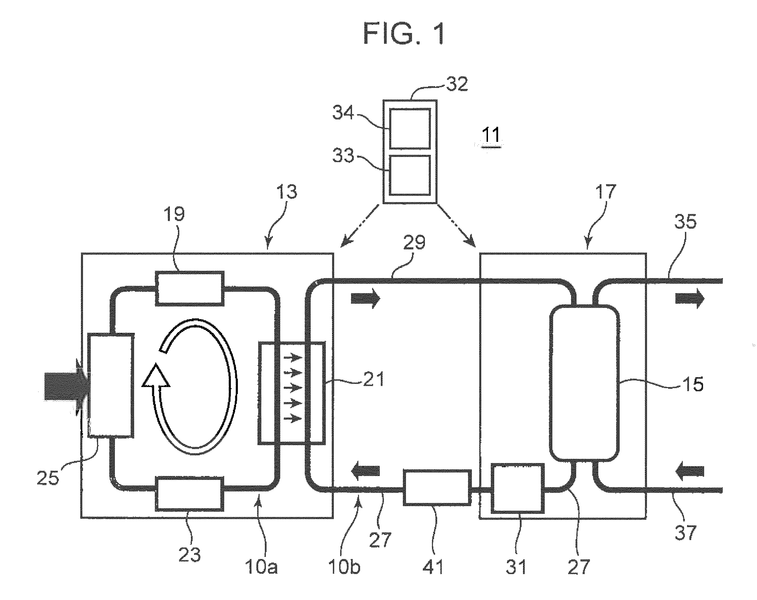

Hereinafter, a heat pump hot-water supply device 11 according to an embodiment of the present invention will be explained with reference to the drawings. As illustrated in Fig. 1, the heat pump hot-water supply device 11 according to this embodiment is provided with a heat pump unit 13, a hot water storage unit 17, an electrolysis device 41, and a controller 32 for controlling these.

The heat pump hot-water supply device 11 is provided with a refrigerant circuit 10a and a hot water storage circuit 10b. The refrigerant circuit 10a is provided with a compressor 19, a water heat exchanger 21, an electric expansion valve 23 as an expansion mechanism, an air heat exchanger 25, and a pipe for connecting these. The hot water storage circuit 10b is provided with a tank 15, a pump 31, the water heat exchanger 21, and a conduit for connecting these. The water heat exchanger 21 has two channels, one of which is included in the refrigerant circuit 10a, and the other of which is included in the hot water storage circuit 10b.

The tank 15 for storing water and the pump 31 are provided in the hot water storage unit 17. The compressor 19, the water heat exchanger 21, the electric expansion valve 23, and the air heat exchanger 25 are provided in the heat pump unit 13. The tank 15 and the water heat exchanger 21 are connected by the conduit. The conduit includes a water inflow pipe 27 having a feed-side channel for feeding the water inside the tank 15 to the water heat exchanger 21, and a hot water outflow pipe 29 having a return-side channel for returning the water that is heated by heat exchange with the water heat exchanger 21 to the tank 15. The pump 31 for feeding the water is provided on the water inflow pipe 27. The pump 31 allows the water in the tank 15 to flow out from the lower part of the tank 15 to the water inflow pipe 27, to pass through the water heat exchanger 21 and the hot water outflow pipe 29 in this order, and to return to the upper portion of the tank 15.

According to this embodiment, carbon dioxide is used as a refrigerant that circulates through the refrigerant circuit 10a. In the water heat exchanger 21, the refrigerant circulating through the refrigerant circuit 10a heats the water by the heat exchange with the water circulating through the hot water storage circuit 10b, and in the air heat exchanger 25, the refrigerant absorbs heat from outside air by the heat exchange.

A water supply pipe 37 and a hot water supply pipe 35 are connected to the tank 15. The hot water supply pipe 35 is connected to the upper part of the tank 15. This hot water supply pipe 35 takes out high-temperature water that is stored in the tank 15, and supplies it to a bathtub and the like. The water supply pipe 37 is connected to the bottom part of the tank 15. The water supply pipe 37 supplies low-temperature water from a water supply source into the tank 15. The water supply source for supplying the water into the tank 15 may include, for example, tap water and groundwater such as well water. The hot-water supply device 11 according to this embodiment is a one-way type hot-water supply device that does not return the hot water supplied from the hot water supply pipe 35 back to the tank 15.

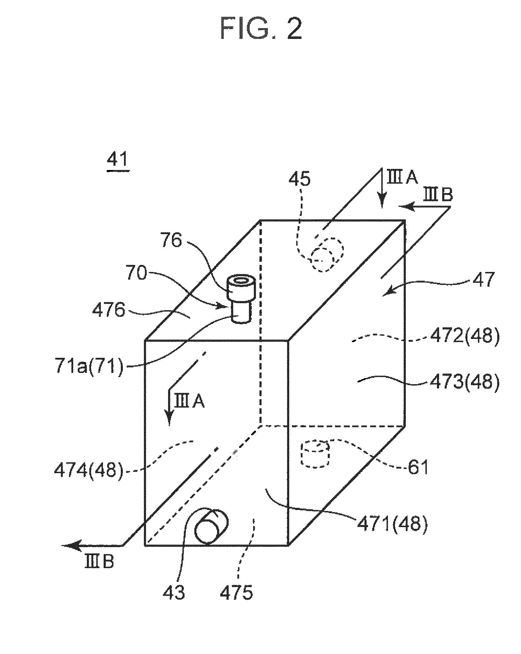

The electrolysis device 41 is provided on the water inflow pipe 27 at the position upstream of the water heat exchanger 21 in the flow of water. According to this embodiment, the electrolysis device 41 is provided at the position downstream of the pump 31 in the flow of water, but this is not restrictive. The electrolysis device 41 has a plurality of electrode pairs 49 as will be described later (refer to Fig. 2).

The controller 32 has a control unit 33 and a memory (memory unit) 34. The control unit 33 controls heat-up operation for heating the water inside the tank 15 based on a heat-up operation schedule stored in the memory 34.

Next, the operation of the heat pump hot-water supply device 11 will be explained. In the heat-up operation for heating the water in the tank 15, the control unit 33 drives the compressor 19 of the heat pump unit 13, adjusts an opening degree of the electric expansion valve 23, and drives the pump 31 of the hot water storage unit 17. Thereby, the low-temperature water inside the tank 15 is fed from a water outlet provided at the bottom part of the tank 15 to the water heat exchanger 21 via the water inflow pipe 27, as illustrated in Fig. 1, and is heated in the water heat exchanger 21. The heated high-temperature water is returned via the hot water outflow pipe 29 into the tank 15 from a water inlet provided at the upper part of the tank 15. Thus, the high-temperature water is stored in the tank 15 from the upper part thereof. In this heat-up operation, scale components included in the water are removed by the electrolysis device 41.

The heat pump hot-water supply device 11 according to this embodiment is the one-way type hot-water supply device. With the one-way type hot-water supply device 11, the water (hot water) that is supplied from the hot water supply pipe 35 is used by a user and is not returned to the tank 15. Therefore, water, whose amount is substantially equal to the amount of the hot water supplied from the tank 15 via the hot water supply pipe 35, is supplied from the water supply source into the tank 15 via the water supply pipe 37. Namely, the water including the scale components is refilled from the water supply source, such as the tap water and the well water, into the tank 15 with higher frequency and with larger quantity. Therefore, when the one-way type heat pump hot-water supply device is used, it is necessary to remove the scale components more efficiently, as compared with a circulation-type cooling water circulation device and a circulation-type hot-water supply device.

### <Electrolysis device>

### (First embodiment)

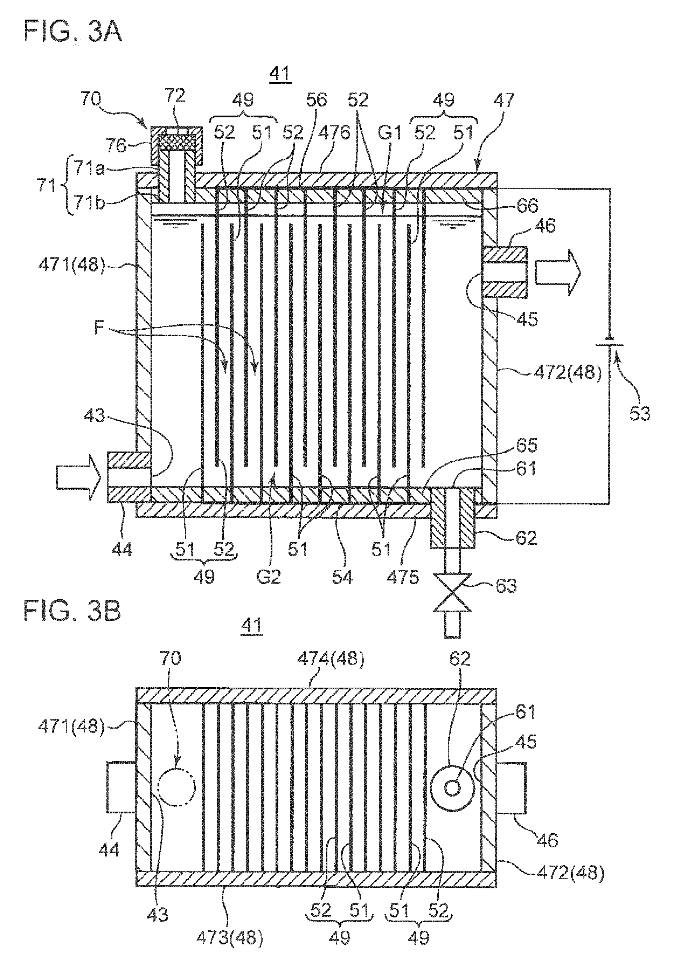

Fig. 2 is a perspective view illustrating the electrolysis device 41 according to the first embodiment of the present invention. Fig. 3A is a cross-sectional view taken along the IIIA - IIIA line in Fig. 2, and Fig. 3B is a cross-sectional view taken along the IIIB - IIIB line in Fig. 2. As illustrated in Fig. 2 and Figs. 3A and 3B, the electrolysis device 41 is provided with a container 47, a plurality of first electrode plates 51 each functioning as one of a cathode and an anode, a plurality of second electrode plates 52 each functioning as the other of the cathode and the anode, and a gas discharge part 70.

According to this embodiment, the container 47 has a substantially rectangular parallelepiped shape, but this is not restrictive. The container 47 has a bottom wall part 475, an upper wall part 476, and side wall parts 48 that connect the peripheral parts thereof. These wall parts form a water flow space. The side wall parts 48 include a first side wall part 471 (upstream side wall part 471) that is located on the upstream side of the flow of water, a second side wall part 472 (downstream side wall part 472) that is located on the downstream side of the flow of water, a third side wall part 473 (right side wall part 473), and a fourth side wall part 474 (left side wall part 474).

According to this embodiment, the bottom wall part 475 and the upper wall part 476 are opposed to each other in the vertical direction, and are arranged to be in parallel to each other, but this is not restrictive. Further, according to this embodiment, the upstream side wall part 471 and the downstream side wall part 472 are opposed to each other in the later-described arrangement direction of the plurality of electrode plates 51 and 52, and are arranged to be in parallel to each other, but this is not restrictive. According to this embodiment, the right side wall part 473 and the left side wall part 474 are arranged to be in parallel to each other, but this is not restrictive.

The container 47 has a water inlet 43 and a water outlet 45. The water inlet 43 is provided at the lower part of the upstream side wall part 471, and the water outlet 45 is provided at the upper part of the downstream side wall part 472. However, the positions where the water inlet 43 and the water outlet 45 are provided are not restrictive.

The water inlet 43 is an opening at the end part on the downstream side of a cylindrical inlet pipe 44 that is provided in the upstream side wall part 471, and the water outlet 45 is an opening at the end part on the upstream side of a cylindrical outlet pipe 46 that is provided in the downstream side wall part 472. The water that is fed by the pump 31 into the electrolysis device 41 via the water inflow pipe 27 flows from the water inlet 43 into the water flow space inside the container 47. The water that flows inside the water flow space flows toward the downstream side of the flow of water, and is discharged from the water outlet 45 to the outside of the container 47.

The gas discharge part 70 for discharging a gas generated by electrolysis from the inside of the container 47 to the outside of the container 47 is provided at the upper wall part 476. According to this embodiment, the gas discharge part 70 is provided at the upper wall part 476 at the position closer to the upstream side wall part 471 than the downstream side wall part 472 in the upper wall part 476, that is, the position on the upstream side of the upper wall part 476, but this is not restrictive. The gas discharge part 70 may be provided at the position on the downstream side in the upper wall part 476, or may be provided at the substantially center position between the downstream side wall part 472 and the upstream side wall part 471 in the upper wall part 476.

The gas discharge part 70 prevents the water inside the container 47 from being discharged to the outside of the container 47 via the gas discharge part 70, and at the same time, discharges the gas inside the container 47 to the outside of the container 47 via the gas discharge part 70. The gas discharge part 70 includes a channel member 71 that forms a gas discharge channel from the container 47, a gas permeable member 72 that is provided on the channel member 71, and a cap 76 as a fixing member that is attached at the end part of the channel member 71 so as to fix the gas permeable member 72 to the channel member 71. A hollow portion inside the channel member 71 functions as the discharge channel.

The channel member 71 has a cylindrical shape. According to this embodiment, the channel member 71 is inserted into a through hole that is formed in the upper wall part 476, but it may be arranged on the upper surface of the upper wall part 476, for example. According to this embodiment, the channel member 71 includes an outer cylindrical part 71a that extends outwardly (upwardly) from the upper wall part 476, and an inner cylindrical part 71b that extends inwardly (downwardly) from the upper wall part 476. The lower end of the inner cylindrical part 71b (the lower end of the channel member 71) is provided at the position higher than the water outlet 45.

The cap 76 includes a cylindrical part that covers the outer peripheral surface of the upper end part of the outer cylindrical part 71a, and an upper surface part that is located at the position higher than the cylindrical part and that has a through hole formed at the center thereof. The through hole of the upper surface part is provided at the position where the center line of the hollow portion of the channel member 71 passes. At the inner peripheral surface of the cylindrical part, an internal thread that is screwed on an external thread formed at the outer peripheral surface of the upper end part of the outer cylindrical part 71a is formed.

The gas permeable member 72 is formed on the outer cylindrical part 71a. Specifically, the gas permeable member 72 is provided at the upper end of the outer cylindrical part 71a according to this embodiment, but this is not restrictive. The gas permeable member 72 is sandwiched between the upper end of the outer cylindrical 71a and the lower surface of the upper surface part of the cap 76, and fixed to the outer cylindrical part 71a by the cap 76 screwed on the outer cylindrical part 71a. The gas permeable member 72 can be replaced by removing the cap 76.

According to this embodiment, the gas permeable member 72 has the outer diameter that is approximately the same as the outer diameter of the outer cylindrical part 71a and the inner diameter of the cylindrical part of the cap 76. The gas permeable member 72 is arranged to cover the entire opening at the upper end of the outer cylindrical part 71a.

As the gas permeable member 72, a membrane that prevents transmission of the water and allows transmission of the gas, a filter that prevents the transmission of the water and allows the transmission of the gas or the like may be used. Specifically, a hollow fiber membrane may be used as the gas permeable member 72, for example, but this is not restrictive. When the hollow fiber membrane is used, the hollow fiber membrane may be provided with the property of preventing the transmission of the water and allowing the transmission of the gas, by adjusting, as appropriate, the inner diameter of the hollow fiber, the opening diameter of a lot of holes provided in the hollow fiber and the like, for example.

The gas inside the container 47 passes through the discharge channel of the channel member 71, reaches the gas permeable member 72, and transmits the gas permeable member 72, to be discharged to the outside from the gas discharge part 70. Supposing that the water inside the container 47 passes through the discharge channel of the channel member 71 and reaches the gas permeable member 72, the transmission of the water is prevented by the gas permeable member 72. Thus, only the gas, out of the gas and the water, is discharged from the gas discharge part 70.

A scale discharge port 61 is provided in the bottom wall part 475. According to this embodiment, the scale discharge port 61 is provided at the position closer to the downstream side wall part 472 than the upstream side wall part 471 in the bottom wall part 475, but this is not restrictive. A discharge pipe 62 is connected to the scale discharge port 61. A opening/closing valve 63 is provided on the discharge pipe 62. Opening/closing operation of the opening/closing valve 63 is controlled by the control unit 33.

The plurality of first electrode plates 51 and the plurality of second electrode plates 52 are arranged inside the container 47. As the material of the electrode plates 51 and 52, titanium, platinum, nickel, carbon, graphite, copper, vitreous carbon or the like may be exemplified.

Hereinafter, the arrangement and the structure of the plurality of electrode plates will be explained specifically, but the following arrangement and the structure are not restrictive. The respective electrode plates are arranged in the direction parallel to the vertical direction. The plurality of electrode plates 51 and 52 are disposed along the horizontal direction with space therebetween in the thickness direction of the electrode plates. The first electrode plates 51 and the second electrode plate 52 are disposed alternately. The adjacent electrode plates 51 and 52 form electrode pairs 49. Thus, the electrolysis device 41 is provided with a plurality of electrode pairs 49. The plurality of first electrode plates 51 are connected to one pole of a power source 53, and the plurality of second electrode plates 52 are connected to the other pole of the power source 53. A DC power source is used as the power source, for example.

The lower end part of the respective first electrode plates 51 are fixed to a support plate 65 that is arranged inside the bottom wall part 475 and adjacent to the bottom wall part 475. The support plate 65 is fixed to the inner surface of the bottom wall part 475. The upper end parts of the respective second electrode plates 52 are fixed to a support plate 66 that is arranged inside the upper wall part 476 and adjacent to the upper wall part 476. The support plate 66 is fixed to the inner surface of the upper wall part 476. The channel member 71 is inserted in the through hole formed in the support plate 66.

The respective first electrode plates 51 extend from the lower end parts that are located on the bottom wall part 475 toward the upper wall part 476. The lower end parts of the respective first electrode plates 51 are connected to a coupling part 54 that has electric conductivity and that extends in the direction parallel to the bottom wall part 475. The coupling part 54 is connected to one pole of the power source 53. A gap G1, through which water can flow, is provided between the upper end parts of the respective first electrode plates 51 and the inner surface of the upper wall part 476.

The respective second electrode plates 52 extend from the upper end parts that are located on the upper wall part 476 toward the bottom wall part 475. The upper end parts of the respective second electrode plates 52 are connected to a coupling part 56 that has the electric conductivity and that extends in the direction parallel to the upper wall part 476. The coupling part 56 is connected to the other pole of the power source 53. A gap G2, through which water can flow, is provided between the lower end parts of the respective second electrode plates 52 and the inner surface of the bottom wall part 475. Gaps between the electrode plates 51 and 52 function as channels F through which water can flow.

As illustrated in Fig. 3B, one end sides of the respective electrode plates in the horizontal direction are in contact with or in the vicinity of the inner surface of the right side wall part 473, and the other end sides in the horizontal direction are in contact with or in the vicinity of the inner surface of the left side wall part 474. Thus, as illustrated in Fig. 3A, the plurality of electrode plates 51 and 52 form meandering channels F that are meandering in the vertical direction inside the container 47.

With thus-structured electrolysis device 41, the scale components in the water deposit as the scale on the cathodes of the respective electrode pairs 49 by the electrolysis, during the period from when the water flows into the container 47 from the water, inlet 43 until when the water flows out from the water outlet 45 to the outside of the container 47. The scale deposited on the cathodes falls off from the cathodes by, for example, periodically inverting polarity of the electrode plates 51 and 52, and settles on the bottom wall part 475 of the container 47. The settled scale is discharged to the outside of the container 47 from the scale discharge port 61 via the discharge pipe 62, when the opening/closing valve 63 is in the open state.

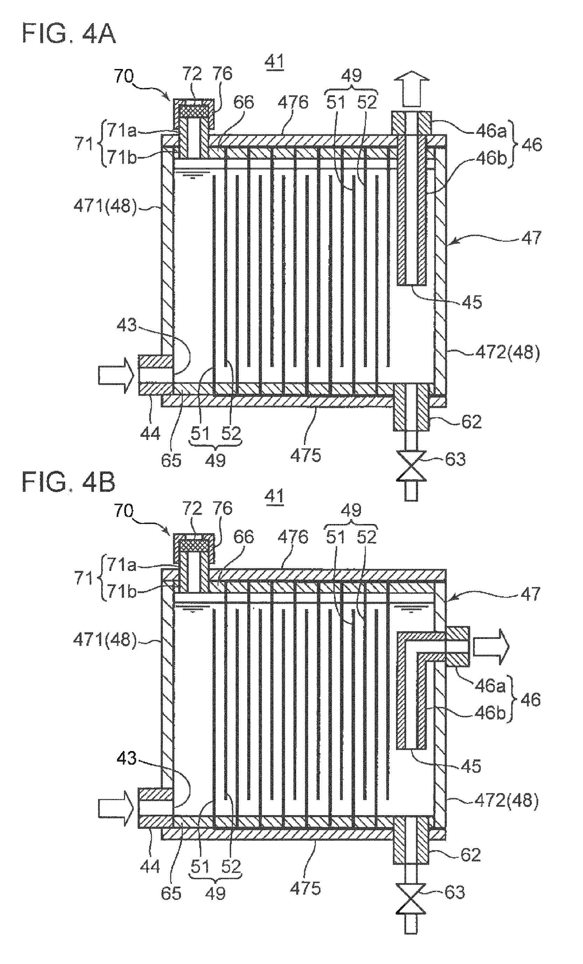

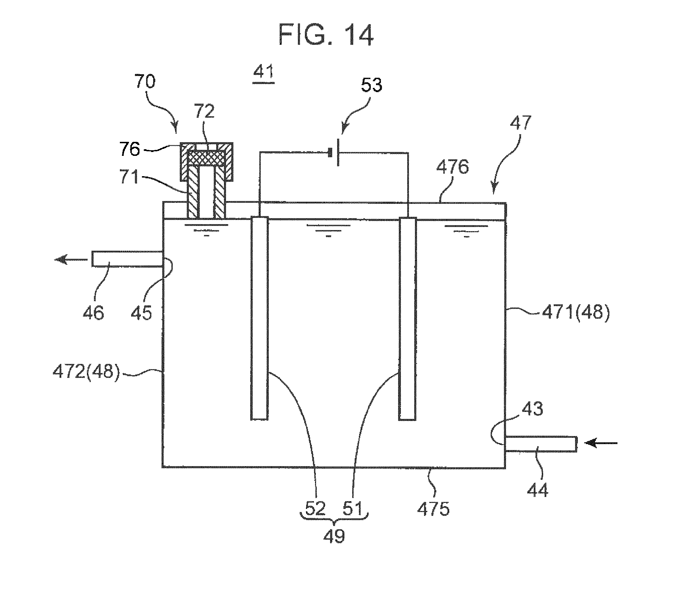

Fig. 4A is a cross-sectional view illustrating a modification example 1 of the electrolysis device 41 according to the first embodiment. According to the modification example 1, the position of the water outlet 45 and the structure of the cylindrical outlet pipe 46, at which the water outlet 45 is provided, are different from those of the electrolysis device 41 as illustrated in Fig. 3. These differences will be mainly explained. Incidentally, the illustration of the power source 53 is omitted in the drawings in and after Fig. 4A (except for Fig. 14).

According to the modification example 1, as illustrated in Fig. 4A, the outlet pipe 46 in the electrolysis device 41 includes an outer cylindrical part 46a that is located outside the container 47, and an inner cylindrical part 46b that is located inside the container 47. The outlet pipe 46 penetrates through the through hole provided in the upper wall part 476, and arranged at the position closer to the downstream side wall part 472 than the plurality of electrode plates 51 and 52. The inner cylindrical part 46b extends downwardly from the upper wall part 476.

The water outlet 45, as the opening located at the lower end of the inner cylindrical part 46b, is located at the position lower than the gas discharge part 70. According to this modification example 1, the length of the inner cylindrical part 46b (the length of the inner cylindrical part 46b extending downwardly) decides the distance between the water outlet 45 and the gas discharge part 70 in the height direction. Therefore, the greater the length of the inner cylindrical part 46b is, the greater the distance between the water outlet 45 and the gas discharge part 70 becomes. Especially, the water outlet 45 is provided at the position closer to the bottom wall part 475 than the upper wall part 476, according to this embodiment. Therefore, it is possible to further improve the effect of preventing the gas from flowing out of the water outlet 45, as compared with the case where the water outlet 45 is provided at the position closer to the upper wall part 476.

Although the outlet pipe 46 is provided at the upper wall part 476 according to the modification example 1 as illustrated in Fig. 4A, it may be provided at the side wall parts 48, such as the downstream side wall part 472, the right side wall part 473, and the left side wall part 474, and the bottom wall part 475.

Specifically, according to a modification example 2 as illustrated in Fig. 4B, for example, the outlet pipe 46 is provided at the downstream side wall part 472. According to this modification example 2, the outlet pipe 46 penetrates through the through hole that is formed in the downstream side wall part 472. The inner cylindrical part 46b that is located inside the container 47 has a portion extending in the horizontal direction from the downstream side wall part 472, and a portion bending at the end part of this portion and extending downwardly from this end part.

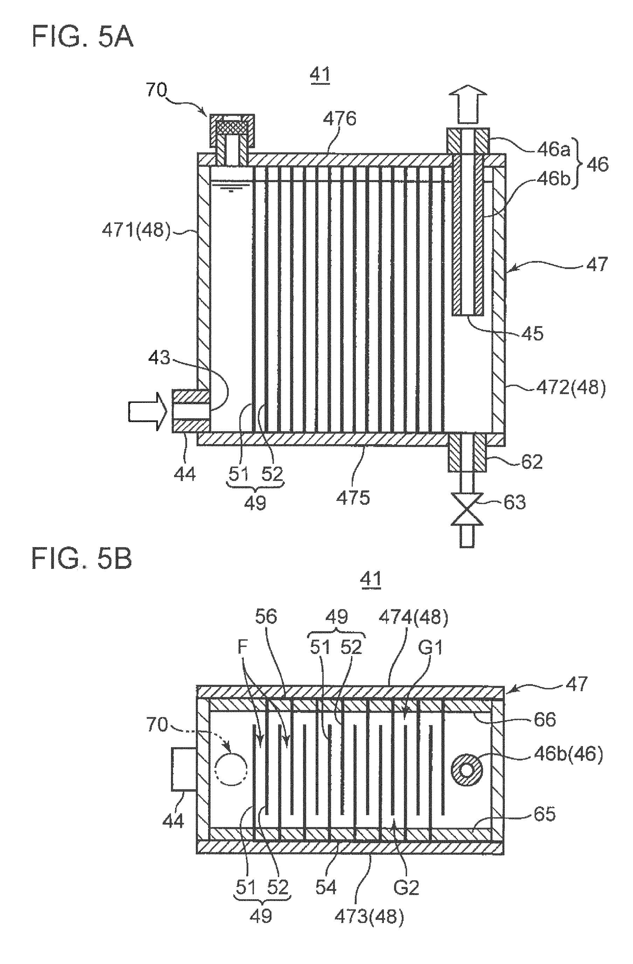

Figs. 5A and 5B are cross-sectional views illustrating a modification example 3 of the electrolysis device according to the first embodiment. The modification example 3 is different from the electrolysis device 41 illustrated in Fig. 4A in the arrangement of the plurality of electrode plates 51 and 52, and in the meandering channels F that are meandering in the horizontal direction (left-right direction) inside the container 47. The meandering channels F may be formed by arranging the electrodes as follows, for example, but the arrangement of the electrodes is not restrictive.

According to the modification example 3, as illustrated in Fig. 5B, one side end parts (right side end parts) of the respective first electrode plates 51 are located inside the third side wall part 473 (right side wall part 473), and are fixed to the support plate 65 that is arranged adjacent to the right side wall part 473. The support plate 65 is fixed to the inner surface of the right side wall part 473. One side end parts (left side end parts) of the respective second electrode plates 52 are located inside the fourth side part 474 (left side wall part 474), and are fixed to the support plate 66 that is arranged adjacent to the left side wall part 474. The support plate 66 is fixed to the inner surface of the left side wall part 474.

The respective first electrode plates 51 extend from the base end parts that are located on the right side wall part 473 toward the left side wall part 474. The base end parts of the respective first electrode plates 51 are connected to the coupling part 54 that has the electric conductivity and that extends in the direction parallel to the right side wall part 473. The coupling part 54 is connected to one pole of the power source. The gap G1, through which water can flow, is provided between the tip end parts of the respective first electrode plates 51 and the inner surface of the left side wall part 474.

The respective second electrode plates 52 extend from the base end part that are located on the left side wall part 474 toward the right side wall part 473. The base end parts of the respective second electrode plates 52 are connected to the coupling part 56 that has the electric conductivity and that extends in the direction parallel to the left side wall part 474. The coupling part 56 is connected to the other pole of the power source. The gap G2, through which water can flow, is provided between the tip end parts of the respective second electrode plates 52 and the inner surface of the right side wall part 473. The gaps between the electrode plates 51 and 52 function as the channels F through which water can flow.

As illustrated in Fig. 5A, the upper end sides of the respective electrode plates are in contact with or in the vicinity of the inner surface of the upper wall part 476, and the lower end sides are in contact with or in the vicinity of the inner surface of the bottom wall part 475. Thus, as illustrated in Fig. 5B, the plurality of electrode plates 51 and 52 form the meandering channels F that are meandering in the horizontal direction (left-right direction) inside the container 47.

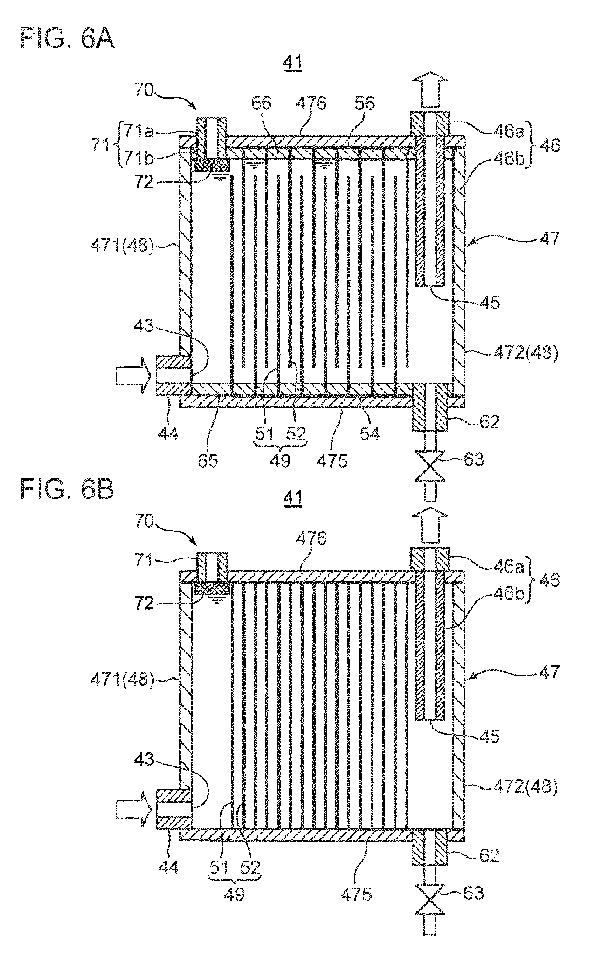

Fig. 6A is a cross-sectional view illustrating a modification example 4 of the electrolysis device 41 according to the first embodiment. The modification example 4 is different from the electrolysis device 41 as illustrated in Fig. 4A in the structure of the gas discharge part 70. The specific explanations are as follows.

According to this modification example 4, the gas permeable member 72 of the gas discharge part 70 is provided at the lower end of the inner cylindrical part 71b of the channel member 71. The gas permeable member 72 is arranged to cover the entire opening at the lower end of the inner cylindrical part 71b, and is fixed to the lower end of the inner cylindrical part 71b. The gas permeable member 72 that is similar to the one as described above may be employed. According to this modification example 4, the meandering channels F are meandering in the vertical direction.

Fig. 6B is a cross-sectional view illustrating a modification example 5 of the electrolysis device 41 according to the first embodiment. This modification example 5 is different from the modification example 4 in that the plurality of electrode plates 51 and 52 are arranged so that the meandering channels F meandering in the horizontal direction (left-right direction) in the container 47 are formed. The arrangement of the plurality of electrode plates 51 and 52 are the same as that of the modification example 3 as described above, and therefore detailed explanations thereof will be omitted.

According to this modification example 5, the gas permeable member 72 is provided at the lower end of the inner cylindrical part 71b of the channel member 71, and is arranged to cover the entire opening at the lower end of the inner cylindrical part 71b, similarly to the modification example 4. The gas permeable member 72 is fixed to the lower end of the inner cylindrical part 71b.

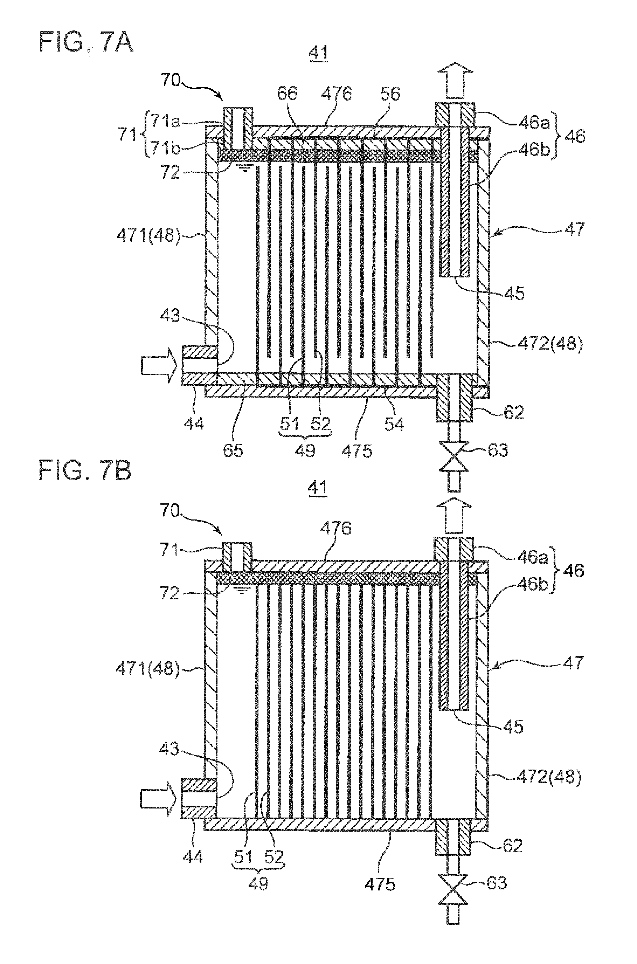

Fig. 7A is a cross-sectional view illustrating a modification example 6 of the electrolysis device 41 according to the first embodiment. This modification example 6 is different from the modification example 4 in the area where the gas permeable member 72 is arranged. Specifically, the gas permeable member 72 is provided not only at the lower end of the inner cylindrical part 71b, but also on the lower side of the upper surface of the container 47 so as to cover the upper surface of the container 47, according to the modification example 6. According to this embodiment, the gas permeable member 72 has the area that is approximately the same as the upper surface of the inside of the container 47 in planar view, for example, but may have the area smaller than the upper surface. Further, the gas permeable member 72 is fixed to the lower surface of the support plate 66 and to the lower end of the inner cylindrical part 71b in parallel to the upper wall part 476, but this is not restrictive. According to this modification example 6, the meandering channels F are meandering in the vertical direction.

Fig. 7B is a cross-sectional view illustrating a modification example 7 of the electrolysis device 41 according to the first embodiment. This modification example 7 is different from the modification example 5 in the area where the gas permeable member 72 is arranged. Specifically, the gas permeable member 72 is provided not only at the lower end of the inner cylindrical part 71b, but also on the lower side of the upper surface of the container 47 so as to cover the upper surface of the container 47, according to the modification example 7. The gas permeable member 72 has the area that is approximately the same as the upper surface of the inside of the container 47 in planar view, for example, but may have the area smaller than the upper surface. Further, the gas permeable member 72 is fixed to the lower surface of the upper wall part 476 and to the lower end of the inner cylindrical part 71b in parallel to the upper wall part 476, but this is not restrictive. According to this modification example 7, the meandering channels F are meandering in the horizontal direction (left-right direction).

### (Second embodiment)

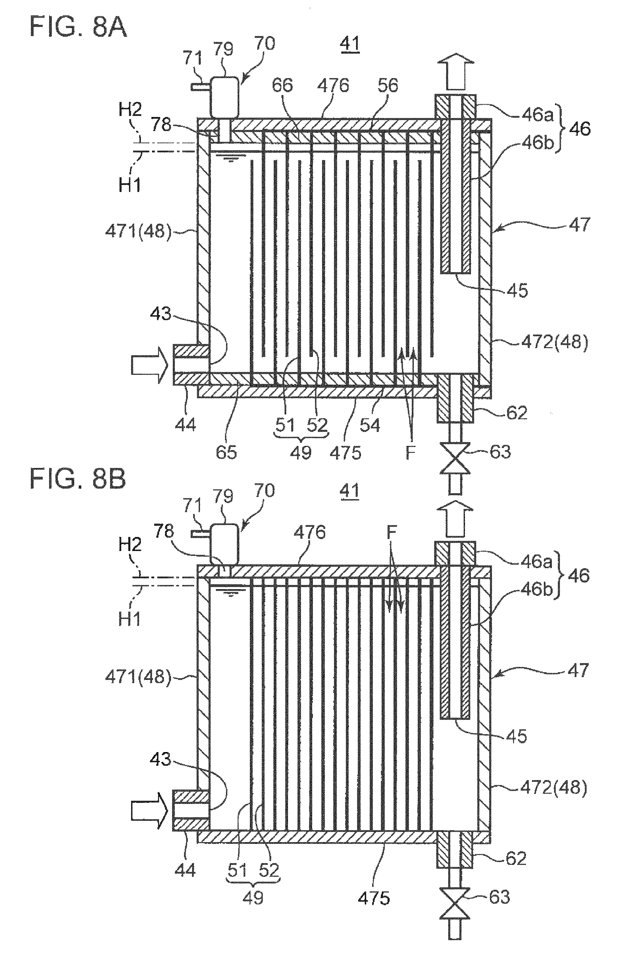

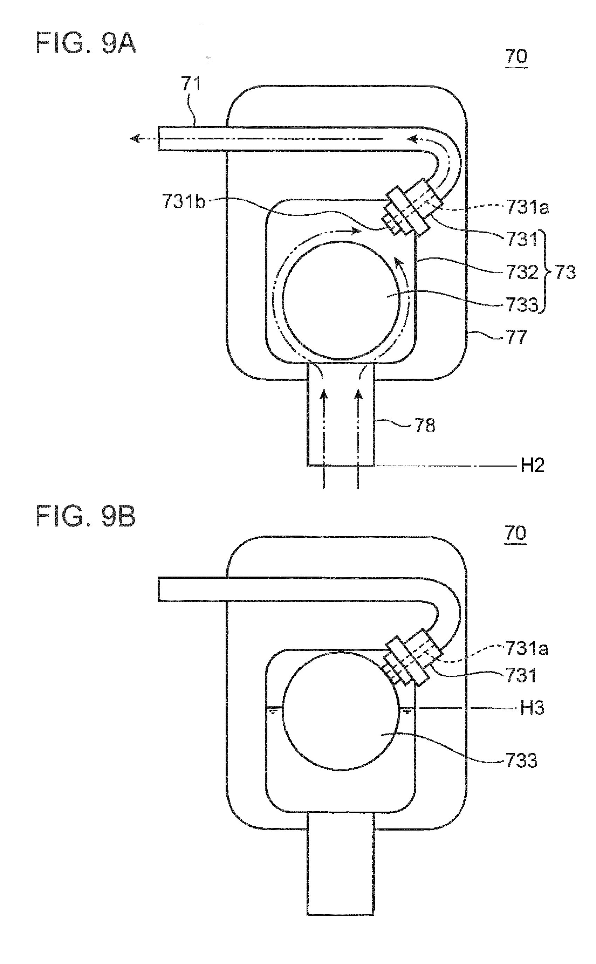

Fig. 8A is a cross-sectional view illustrating the electrolysis device 41 according to a second embodiment of the present invention. Fig. 9A is a schematic view illustrating the state where a gas is discharged from a gas discharge part (automatic discharge valve) 70 according to the second embodiment, and Fig. 9B is a schematic view illustrating the state where water is prevented from being discharged from the gas discharge part 70. The electrolysis device 41 according to the second embodiment is different from the first embodiment in the structure of the gas discharge part 70. The specific explanations are as follows.

As illustrated in Fig. 9A, the gas discharge part 70 according to the second embodiment includes an opening/closing mechanism 73. Specifically, the gas discharge part 70 includes a first channel member 71 and a second channel member 78 that form a gas discharge channel from the container 47, and the opening/closing mechanism 73 that opens and closes the discharge channel.

According to this embodiment, the opening/closing mechanism 73 has, for example, a float case 732, a valve body 731, and a float part 733, but this is not restrictive. The float case 732 communicates with the container 47 via the second channel member 78. The valve body 731 has a connecting channel 731 a for connecting the float case 732 and the first channel member 71. For example, the float part 733 is a sphere that is hollow inside, but this is not restrictive. The float part 733, having the specific gravity smaller than that of water, floats on water and moves vertically inside the float case 732 according to a water level inside the float case 732.

The float case 732, the valve body 731, and the float part 733 are housed in a case 77. The case 77, the opening/closing mechanism 73, the first channel member 71, and the second channel member 78 are integrally formed to make the automatic discharge valve. The automatic discharge valve prevents the water from being discharged, and automatically switches whether the discharge of the gas is acceptable or not according to the water level.

The downstream side part of the first channel member 71 extends to the outside of the case 77. The upstream side part of the second channel member 78 extends to the outside of the case 77, and extends downwardly. The second channel member 78 is penetrated through the through hole provided in the upper wall part 476 of the container 47. The lower end of the second channel member 78 is located at the same height as the lower surface of the upper wall part 476, or at the slightly lower position than the lower surface of the upper wall part 476. In the electrolysis device 41 according to the second embodiment, the meandering channels F are meandering in the vertical direction. Incidentally, the structure of the automatic discharge valve is not limited to the structure as described above.

Next, the operation of the gas discharge part 70 will be explained for the cases where the water level is H1, H2 and H3. First, when the water level inside the container 47 is H1, that is, the position lower than the lower end of the second channel member 78, as illustrated in Fig. 8A, the lower end of the second channel member 78 is not blocked by the water. Therefore, the gas flows in the order of the second channel member 78, the float case 732, the valve body 731, and the first channel member 71 and discharged to the outside of the container 47, as illustrated in chain double-dashed lines in Fig. 9A.

Next, when the water level reaches the height H2 as illustrated in Fig. 8A and Fig. 9A, that is, when the water level reaches the lower end of the second channel member 78, the lower end of the second channel member 78 is blocked by the water. Therefore, the gas is prevented from being discharged to the outside of the container 47 via the gas discharge part 70.

When the water level increases further and the water flows into the float case 732, the float part 733 moves upwardly inside the float case 732. Then, when the water level inside the float case 732 reaches a predetermined reference height H3, as illustrated in Fig. 9B, the float part 733 blocks an opening end 731b of the connecting channel 731a. Thus, the water is prevented from flowing out to the first channel member 71, and thus the water inside the container 47 is prevented from being discharged to the outside of the container 47 via the gas discharge part 70.

Fig. 8B is a cross-sectional view illustrating a modification example 1 of the electrolysis device 41 according to the second embodiment. This modification example 1 is different from the aspect as illustrated in Fig. 8A in that the plurality of electrode plates 51 and 52 are arranged so that the meandering channels F meandering in the horizontal direction (left-right direction) in the container 47 are formed. As the structure of the gas discharge part 70 is the same as the aspect as illustrated in Fig. 8A, and the arrangement of the plurality of electrode plates 51 and 52 is the same as that of the modification example 3 of the first embodiment, the detailed explanations will be omitted.

### (Third embodiment)

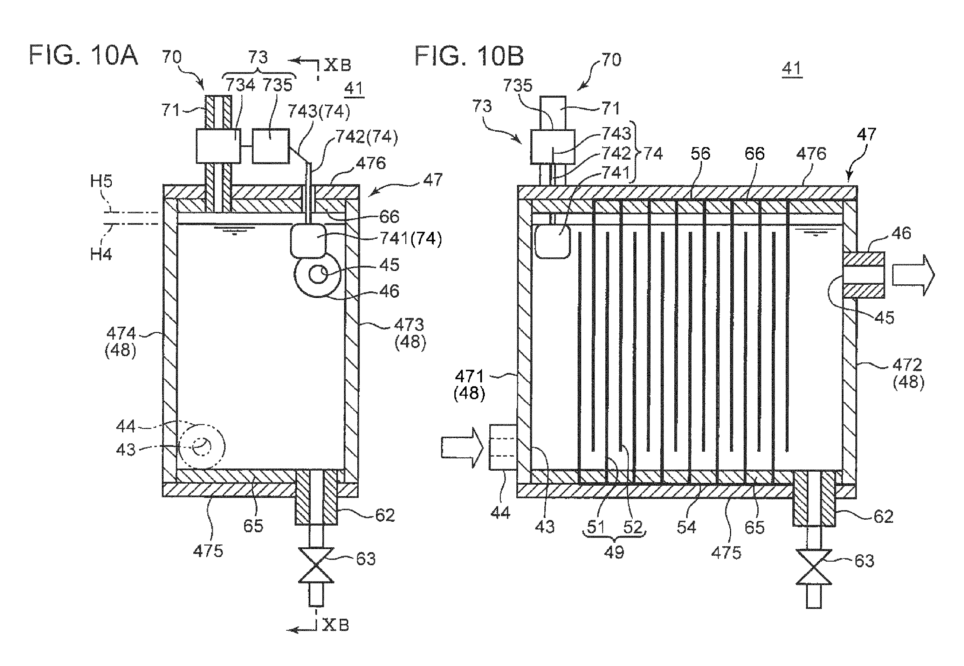

Figs. 10A and 10B are cross-sectional views illustrating the electrolysis device 41 according to a third embodiment of the present invention. The electrolysis device 41 according to the third embodiment is different from the first embodiment in the structure of the gas discharge part 70. The specific explanations are as follows.

According to the third embodiment, the gas discharge part 70 includes the opening/closing mechanism 73. Specifically, the gas discharge part 70 includes the channel member 71 that forms a gas discharge channel from the container 47, the opening/closing mechanism 73 that opens and closes the discharge channel, and a water level detecting part 74 that detects the water level inside the container 47.

The channel member 71 has a cylindrical shape, for example, and penetrates through the through hole formed in the upper wall part 476. The lower end of the channel member 71 is arranged at the position higher than the water outlet 45. The hollow portion inside the channel member 71 functions as the discharge channel.

The opening/closing mechanism 73 is provided at the channel member 71. The opening/closing mechanism 73 includes a mechanism body 734 that is attached to the channel member 71, and a controller 735 that controls opening/closing of the mechanism body 734. An electromagnetic valve may be used as the mechanism body 734, for example, but this is not restrictive. It should be noted that, when the function of the controller 735 of the opening/closing mechanism 73 is performed by the controller 32 as illustrated in Fig. 1, the controller 735 of the opening/closing mechanism 73 can be omitted.

The water level detecting part 74 includes a float 741 that is hollow inside, a shaft part 742 that is fixed to the upper part of the float 741, and a cable 743 that transmits the operation of the shaft part 742 to the controller 735.

With this gas discharge part 70, the opening/closing mechanism 73 links with the water level detecting part 74 and switches to the open state, when the water level is equal to or lower than a predetermined reference height H5 that is lower than the channel member 71. The reference height H5 is set at the position higher than the water outlet 45. The specific operation is as follows.

When the water level in the container 47 is at the height H4 that is lower than the reference height H5, as illustrated in Fig. 10A, the float 741 floats at the position corresponding to the height H4. At this time, the discharge channel of the channel member 71 is open. Therefore, under this state, the gas inside the container 47 is discharged to the outside of the container 47 via the discharge channel of the channel member 71. In addition, as the water level H4 is located at the position lower than the lower end of the channel member 71 under this state, the water is not discharged from the discharge channel of the channel member 71.

Meanwhile, when the water level in the container 47 increases to the reference height H5, the float 741 rises as compared with the case when the height is H4. Thereby, the discharge channel of the channel member 71 is blocked. Therefore, under this state, the gas and the water inside the container 47 are not discharged to the outside of the container 47 via the discharge channel of the channel member 71.

Incidentally, according to the third embodiment, the inlet pipe 44 is provided at the position closer to the bottom wall part 475 than the upper wall part 476 in the upstream side wall part 471, and at the position closer to the left side wall part 474 than the right side wall part 473, but this is not restrictive. In addition, the outlet pipe 46 is provided at the position closer to the upper wall part 476 than the bottom wall part 475 in the downstream side wall part 472, and at the position closer to the right side wall part 473 than the left side wall part 474, but this is not restrictive. The gas discharge part 70 is provided at the position closer to the upstream side wall part 471 than the downstream side wall part 472 in the upper wall part 476, but this is not restrictive. Further, in this electrolysis device 41, the meandering channels F are meandering in the vertical direction.

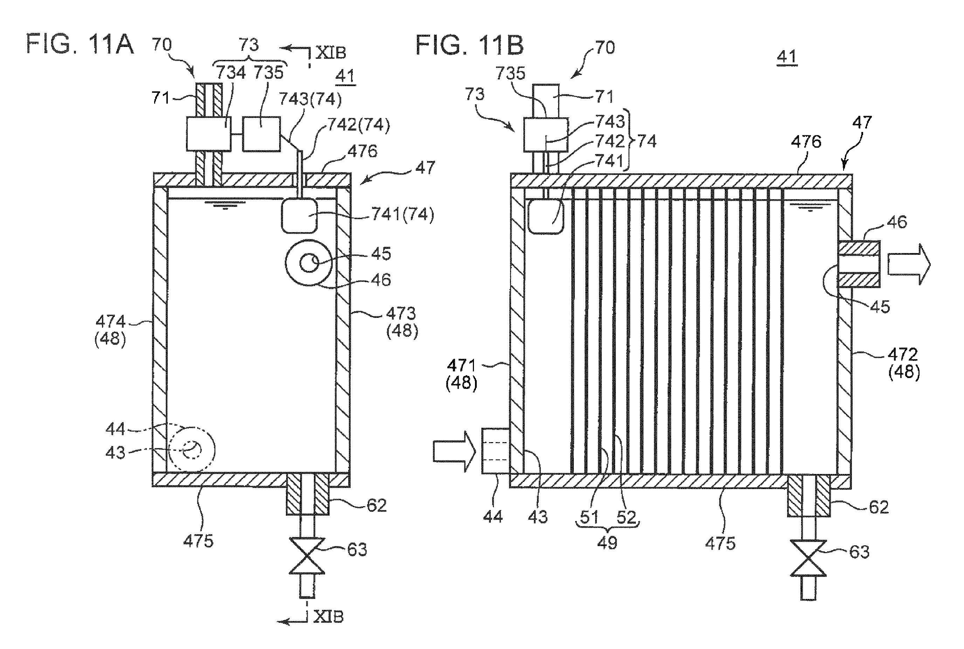

Figs. 11A and 11B are cross-sectional views illustrating a modification example 1 of the electrolysis device 41 according to the third embodiment. This modification example 1 is different from the aspect as illustrated in Figs. 10A and 10B in that the plurality of electrode plates 51 and 52 are arranged so that the meandering channels F meandering in the horizontal direction (left-right direction) in the container 47 are formed. The arrangement of the plurality of electrode plates 51 and 52 is the same as that of the modification example 3 of the first embodiment, and therefore detailed explanations thereof will be omitted.

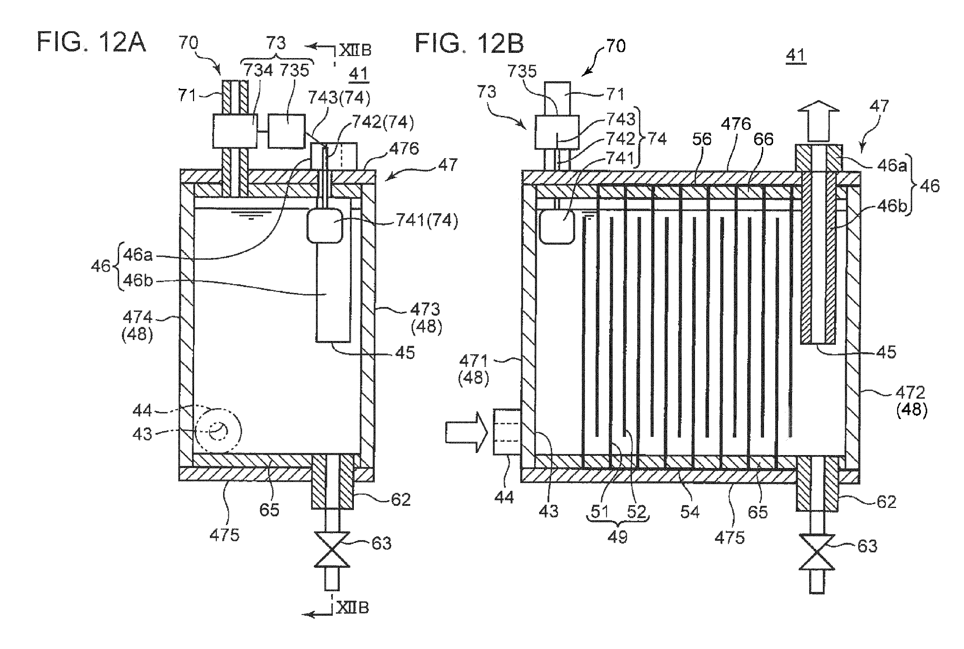

Figs. 12A and 12B are cross-sectional views illustrating a modification example 2 of the electrolysis device 41 according to the third embodiment. This modification example 2 is different from the electrolysis device 41 as illustrated in Figs. 10A and 10B in the position of the water outlet 45 and the structure of the cylindrical outlet pipe 46 at which the water outlet 45 is provided. The position of the water outlet 45 and the structure of the cylindrical outlet pipe 46 at which the water outlet 45 is provided are the same as those of the modification example 1 of the first embodiment, and therefore detailed explanations thereof will be omitted.

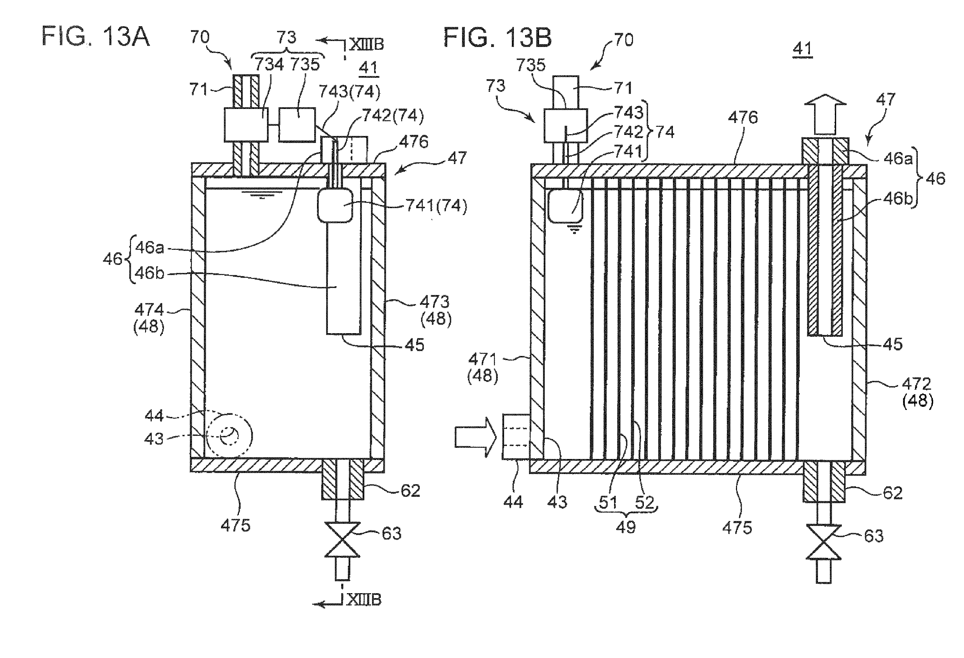

Figs. 13A and 13B are cross-sectional views illustrating a modification example 3 of the electrolysis device 41 according to the third embodiment. This modification example 3 is different from the modification example 1 as illustrated in Figs. 11A and 11B in the position of the water outlet 45 and the structure of the cylindrical outlet pipe 46 at which the water outlet 45 is provided. The position of the water outlet 45 and the structure of the cylindrical outlet pipe 46 at which the water outlet 45 is provided are the same as those of the modification example 1 of the first embodiment, and therefore detailed explanations thereof will be omitted.

### (Fourth embodiment)

According to the first to the third embodiments, the explanation was given to the aspect in which the electrolysis device 41 has the plurality of electrode pairs 49, but this is not restrictive. The electrolysis device 41 may have such an aspect that, for example, a single electrode pair 49 is arranged inside the container 47, as the electrolysis device 41 according to a fourth embodiment of the present invention as illustrated in Fig. 14. Each of the electrodes 51 and 52 forming the electrode pair 49 may have a plate shape or a rod shape. According to this fourth embodiment, the gas discharge part 70 as illustrated in Fig. 6A, Fig. 7A, Fig. 8A, or Fig. 10A and 10B may be employed instead of the gas discharge part 70 as illustrated in Fig. 14.

As explained thus far, according to the first to the fourth embodiments, the gas discharge part 70 is provided at the position higher than the water outlet 45, which makes it possible to discharge the gas collected at the upper part inside the container to the outside of the container via the gas discharge part, without hindering the water flow inside the container from the water inlet 43 to the water outlet 45. Further, as the gas discharge part 70 is provided at the position higher than the water outlet 45, it is possible to prevent the gas from flowing out of the water outlet 45 to the downstream side. Furthermore, as the gas discharge part 70 prevents the discharge of the water inside the container 47, it is possible to prevent the water inside the container 47 from flowing out, together with the gas, to the outside of the container 47 via the gas discharge part 70.

According to the first embodiment, the gas discharge part 70 includes the channel member 71 that forms the gas discharge channel from the container 47, and the gas permeable member 72 that is provided on the channel member 71 and that prevents the transmission of the water and allows the transmission of the gas. According to this structure, it is possible to prevent the transmission of the water and to allow the transmission of the gas only by providing the gas permeable member 72 on the channel member 71. This makes it possible to simplify the structure of the electrolysis device 41, and to realize space saving.

Further, according to the first embodiment, the channel member 71 includes the outer cylindrical part 71a extending outwardly from the container 47, and the gas permeable member 72 is provided on the outer cylindrical part 71a. This makes it possible to facilitate maintenance at the time of replacing the gas permeable member 72, for example.

According to the second embodiment, the float part 733 moves vertically in the float case 732 according to the water level inside the float case 732 and, when the water level inside the float case 732 reaches the predetermined reference height, the opening end 731b of the connecting channel 731 a is blocked. It is possible by such a simple structure to automatically discharge the gas inside the container 47 to the outside of the container 47, while preventing the discharge of the water inside the container 47.

According to the third embodiment, the opening/closing mechanism links with the water level detecting part 74 and switches to the open state, when the water level inside the container 47 is equal to or lower than the reference height, and links with the water level detecting part 74 and switches to the closed state, when the water level exceeds the reference height. This makes it possible to prevent the water from flowing out of the gas discharge part 70 more certainly. When the reference height is set at the position higher than the water outlet 45, it is possible to further improve the effect of preventing the gas from flowing out of the water outlet 45 to the downstream side.

According to the respective embodiments, the position of the water outlet 45 can be lowered by providing the water outlet 45 in the side wall part 48 that is located at the position lower than the upper wall part 476. This makes it possible to prevent the gas from flowing out of the water outlet 45 to the downstream side.

According to the respective embodiments, at least a part of the inner cylindrical part 46b has such a shape as to extend downwardly toward the opening that is located at the lower end of the inner cylindrical part 46b. When the water outlet 45 is provided at the opening of the inner cylindrical part 46b, it is possible to adjust the distance between the gas discharge part 70 and the water outlet 45 in the height direction, by adjusting the length of the inner cylindrical part 46b extending downwardly.

### (Other embodiments)

It should be noted that the present invention is not limited to the embodiments, and various changes and modifications can be made without departing from the scope of the invention.

For example, according to the third embodiment, the explanation was given to the case where the opening/closing mechanism 73 links with the water level detecting part 74 and switches to the open state or to the closed state, but this is not restrictive. In the electrolysis device 41 according to the third embodiment, for example, the control unit 33 may receive water level data that is detected by the water level detecting part such as an ultrasonic type water level sensor, an infrared type water level sensor, and an electrode type water level sensor. When the water level data exceeds the reference height that is stored in the memory 34 in advance, the control of closing the discharge channel of the opening/closing mechanism 73 may be executed. According to this aspect, the control unit 33 controls the opening/closing mechanism 73 so that the discharge channel of the opening/closing mechanism 73 is switched to the open state when the water level data is equal to or lower than the reference height. The reference height is set at the position that is lower than the channel member 71.

According to the embodiments, the explanation was given to the case where the electrolysis device 41 is provided on the water inflow pipe 27 located at the position downstream of the pump 31 and upstream of the water heat exchanger 21 in the water channel of the heat pump hot-water supply device 11, but this is not restrictive. It would be enough when the electrolysis device 41 is provided upstream of the water heat exchanger 21 in the water channel. Specifically, for example, the electrolysis device 41 may be provided on the water inflow pipe 27 that is upstream of the pump 31, or may be provided on the water supply pipe 37 for supplying water from the water supply source to the tank 15.

According to the embodiments, the explanation was given to the case where the container 47 has the substantially rectangular parallelepiped shape, but this is not restrictive. The container 47 may have a rectangular column shape other than the rectangular parallelepiped shape, or may have a round column shape.

Further, according to the embodiments, the explanation was given to the case where the hot-water supply device is the one-way type, but this is not restrictive. The present invention may also be applied to a hot-water supply device in which, for example, a part of water (hot water) supplied from the hot water supply pipe 35 is returned back to the tank 15.

Incidentally, the embodiments as described above can be summarized as follows.

(1) The electrolysis device is used in a heat pump hot-water supply device provided with a water heat exchanger for heating water and is for removing a scale component included in the water. The electrolysis device includes a container that has a water inlet and a water outlet, a plurality of electrodes that are arranged inside the container, and a gas discharge part that is provided at a position higher than the water outlet and that discharges a gas inside the container to the outside of the container while preventing water inside the container from being discharged to the outside of the container.

The gas generated in the process of removing the scale component by using the electrolysis is collected at the upper part in the container. Thus, according to this structure, it is possible to discharge the gas collected at the upper part in the container to the outside of the container via the gas discharge part, without hindering the water flow inside the container from the water inlet to the water outlet, by providing the gas discharge part at the position higher than the water outlet. Further, as the gas discharge part is provided at the position higher than the water outlet, it is possible to prevent the gas from flowing out of the water outlet to the downstream side. Furthermore, as the gas discharge part prevents the discharge of the water inside the container, it is possible to prevent the water inside the container from being discharged, together with the gas, to the outside of the container via the gas discharge part.

(2) According to the electrolysis device, it is preferable that the gas discharge part includes: a channel member that forms a discharge channel of the gas from the container; and a gas permeable member that is provided on the channel member and that transmits the gas while preventing transmission of the water.

According to this structure, it is possible to prevent the transmission of the water and to allow the transmission of the gas only by providing the gas permeable member on the channel member. This makes it possible to simplify the structure of the electrolysis device, and to realize the space saving.

(3) It is preferable that the channel member includes an outer cylindrical part that extends outwardly from the container, and the gas permeable member is provided on the outer cylindrical part.

According to this structure, the gas permeable member is provided on the outer cylindrical part. This makes it possible to facilitate maintenance at the time of replacing the gas permeable member, for example.

(4) According to another aspect of the electrolysis device, for example, the gas discharge part includes a channel member that forms a discharge channel of the gas from the container, and an opening/closing mechanism for opening/closing the discharge channel.

(5) Specifically, it is preferable that the opening/closing mechanism in the gas discharge part includes a float case that communicates with the container, a valve body that has a connecting channel for connecting the float case and the channel member, and a float part that moves vertically according to a water level inside the float case and that blocks an opening end of the connecting channel when the water level inside the float case reaches a predetermined reference height.

According to this structure, the float part moves vertically in the float case according to the water level inside the float case. When the water level inside the float case reaches the predetermined reference height, the float part blocks the opening end of the connecting channel. It is possible by such a simple structure to automatically discharge the gas inside the container to the outside of the container, while preventing the discharge of the water inside the container.

(6) According to the aspect of (4), it is preferable that the gas discharge part further includes a water level detecting part that detects a water level inside the container, and the opening/closing mechanism in synchronization with the water level detecting part switches to an open state, when the water level is equal to or lower than a predetermined reference height that is lower than the channel member.

According to this structure, the opening/closing mechanism links with the water level detecting part and switches to the open state, when the water level inside the container is equal to or lower than the reference height. This makes it possible to prevent the water from flowing out of the gas discharge part more certainly.

(7) When the reference height is set at a position higher than the water outlet, it is possible to further improve the effect of preventing the gas from flowing out of the water outlet toward the downstream side.

(8) The electrolysis device may further include a water level detecting part that detects a water level inside the container, and a control unit that controls the opening/closing mechanism, in which the control unit may execute control of switching the opening/closing mechanism to an open state, when the water level is equal to or lower than a predetermined reference height that is lower than the channel member.

(9) According to the electrolysis device, it is preferable that the container includes a bottom wall part, an upper wall part, and a side wall parts connecting the bottom wall part and the upper wall part, the gas discharge part is provided at the upper wall part, and the water outlet is provided at the side wall part.

According to this structure, the position of the water outlet can be lowered by providing the water outlet at the side wall part that is located at the position lower than the upper wall part. This makes it possible to prevent the gas from flowing out of the water outlet to the downstream side.

(10) According to the electrolysis device, it is preferable that the container includes a bottom wall part, an upper wall part, a side wall part connecting the bottom wall part and the upper wall part, and an inner cylindrical part that extends from the upper wall part or the side wall part into the container, at least a part of the inner cylindrical part has a shape extending downwardly toward an opening that is located at a lower end of the inner cylindrical part, and the water outlet is provided at the opening of the inner cylindric part.

According to this structure, it is possible to adjust the distance between the gas discharge part and the water outlet in the height direction, by adjusting the length of the inner cylindrical part extending downwardly.

(11) According to the electrolysis device, it is preferable that each of the electrodes has a plate shape, and the plurality of electrodes are disposed to extend in a vertical direction with space therebetween in a thickness direction, so as to form a meandering channel meandering in the vertical direction or in a horizontal direction in the container.

When the meandering channels are formed like this, the channel length inside the container increases, and the electrolysis efficiency is enhanced, as a result of which the gas generation amount is increased. As the gas discharge part is provided, however, the generated gas can be discharged to the outside of the container as appropriate.

(12) The heat pump hot-water supply device includes: a heat pump unit which has a water heat exchanger for heating water, and in which a refrigerant circulates through a refrigerant pipe; a hot water storage unit which includes a tank for storing the water, a feed-side channel for feeding the water inside the tank to the water heat exchanger, and a return-side channel for returning the water heated by the water heat exchanger back to the tank; a water supply pipe which supplies water from a water supply source to the tank and a hot water supply pipe which supplies high-temperature water stored in the tank; and the electrolysis device which removes the scale component included in the water.

### Explanation of Reference Numerals

- 11: Heat pump hot-water supply device
- 15: Tank
- 21: Water heat exchanger
- 32: Controller
- 33: Control unit
- 35: Hot water supply pipe
- 37: Water supply pipe
- 41: Electrolysis device
- 43: Water inlet
- 45: Water outlet
- 46a: Outer cylindrical part
- 46b: Inner cylindrical part
- 47: Container
- 475: Bottom wall part
- 476: Upper wall part
- 48: Side wall part
- 49: Electrode pair
- 51: First electrode plate
- 52: Second electrode plate
- 70: Gas discharge part
- 71: Channel member
- 71a: Outer cylindrical part
- 72: Gas permeable member
- 73: Opening/closing mechanism
- 74: Water level detecting part

## Claims

1. An electrolysis device that is used in a hot-water supply device provided with a water heat exchanger for heating water and that is for removing a scale component included in the water,
the electrolysis device comprising:
a container that has a water inlet and a water outlet;
a plurality of electrodes that are arranged inside the container; and
a gas discharge part that is provided at a position higher than the water outlet and that discharges a gas inside the container to the outside of the container while preventing water inside the container from being discharged to the outside of the container.

2. The electrolysis device according to claim 1, wherein the gas discharge part comprises:
a channel member that forms a discharge channel of the gas from the container, and
a gas permeable member that is provided on the channel member and that transmits the gas while preventing transmission of the water.

3. The electrolysis device according to claim 2, wherein
the channel member comprises an outer cylindrical part that extends outwardly from the container, and
the gas permeable member is provided on the outer cylindrical part.

4. The electrolysis device according to claim 1, wherein the gas discharge part comprises:
a channel member that forms a discharge channel of the gas from the container, and
an opening/closing mechanism for opening/closing the discharge channel.

5. The electrolysis device according to claim 4, wherein the opening/closing mechanism comprises:
a float case that communicates with the container,
a valve body that has a connecting channel for connecting the float case and the channel member, and
a float part that moves vertically according to a water level inside the float case and that blocks an opening end of the connecting channel when the water level inside the float case reaches a predetermined reference height.

6. The electrolysis device according to claim 4, wherein
the gas discharge part further comprises a water level detecting part that detects a water level inside the container, and
the opening/closing mechanism in synchronization with the water level detecting part switches to an open state, when the water level is equal to or lower than a predetermined reference height that is lower than the channel member.

7. The electrolysis device according to claim 6, wherein the reference height is set at a position higher than the water outlet.

8. The electrolysis device according to claim 4, further comprising:
a water level detecting part that detects a water level inside the container; and
a control unit that controls the opening/closing mechanism, wherein
the control unit executes control of switching the opening/closing mechanism to an open state, when the water level is equal to or lower than a predetermined reference height that is lower than the channel member.

9. The electrolysis device according to any one of claims 1 to 8, wherein
the container comprises a bottom wall part, an upper wall part, and a side wall part connecting the bottom wall part and the upper wall part,
the gas discharge part is provided at the upper wall part, and
the water outlet is provided at the side wall part.

10. The electrolysis device according to any one of claims 1 to 8, wherein
the container comprises a bottom wall part, an upper wall part, a side wall part connecting the bottom wall part and the upper wall part, and an inner cylindrical part that extends from the upper wall part or the side wall part into the container,
at least a part of the inner cylindrical part has a shape extending downwardly toward an opening that is located at a lower end of the inner cylindrical part, and
the water outlet is provided at the opening of the inner cylindrical part.

11. The electrolysis device according to any one of claims 1 to 10, wherein
each of the electrodes has a plate shape, and
the plurality of electrodes are disposed to extend in a vertical direction with space therebetween in a thickness direction, so as to form a meandering channel meandering in the vertical direction or in a horizontal direction in the container.

12. A heat pump hot-water supply device comprising:
a heat pump unit which has a water heat exchanger for heating water, and in which a refrigerant circulates through a refrigerant pipe;
a hot water storage unit which includes a tank for storing the water, a feed-side channel for feeding the water inside the tank to the water heat exchanger, and a return-side channel for returning the water heated by the water heat exchanger back to the tank;
a water supply pipe which supplies water from a water supply source to the tank and a hot water supply pipe which supplies high-temperature water stored in the tank; and
the electrolysis device according to any one of claims 1 to 11 which removes the scale component included in the water.
